# EUROPEAN PATENT SPECIFICATION

(11) **EP 2 609 356 B1**
(45) Date of publication and mention of the grant of the patent: **02.11.2016**
(21) Application number: 12738187.9
(22) Date of filing: 06.06.2012
(51) Int. Cl.: F16L 33/26, F16L 25/00

(54) **FITTING**
ANSCHLUSSSTÜCK
RACCORD

(30) Priority: 07.06.2011 IT BS20110083
(43) Date of publication of application: 03.07.2013
(73) Proprietor: M.F.C. S.r.l., 25065 Lumezzane, Brescia (IT)
(72) Inventor: PONCHIARDI, Carlo, 25065 Lumezzane, Brescia (IT); PONCHIARDI, Fulvio, 25065 Lumezzane, Brescia (IT)
(74) Representative: Chimini, Francesco
(86) International application number: PCT/IB2012/052851
(87) International publication number: WO 2012/168879

(56) References cited:
- EP-A1- 2 083 203
- WO-A1-97/42442
- US-A1- 2007 029 795

## Description

The present invention relates to a fitting for corrugated metal tubes, for example with parallel coils, of the type comprising a threaded nipple, a tightening collet and a threaded nut. Such fitting is suitable for connecting the corrugated tube to other components of a pipe network and/or system, such as another corrugated tube, a plain tube, an end to be soldered, threaded ends of any type. However, other types of fitting are also possible.

The quick fitting may be used in any sphere of application, within the limits posed by the resistance of the constituent materials of said fitting to temperature and/or corrosive substances etc.

EP 2 083 203 A1 discloses a fitting for corrugated tubes comprising all the features of the preamble of claim 1. WO 97/42442 A1 discloses another fitting for corrugated tubes, comprising a collet that is resiliently yieldable.

The purpose of the present invention is to propose a fitting for corrugated tubes, particularly metal tubes, composed of the least number possible of components, therefore simple to produce, assemble and use, and at the same time highly safe and reliable, and which is liquid and gas proof.

Said purpose is achieved by a fitting for corrugated metal tubes, comprising the features of claim 1.

In one embodiment, a guide end portion of the collet extends outside the nipple-nut assembly so as to cover one or more coils of the corrugated tube.

In a preferred embodiment, the threaded nut has, internally, a step or chamfer suitable for axially engaging the annular projection so as to drag the collet towards the nipple.

In one embodiment, the threaded nipple has, internally, an annular abutment shoulder for the end of the corrugated tube. Advantageously, said annular abutment shoulder has a substantially concave semi-circular abutment end, that is of a shape substantially complementary to the coils of the corrugated tube.

Consequently, said concave annular shoulder, thanks to the pressure exerted by the deformed end of the collet on the rear and upper surface of the last coil of the corrugated tube, makes it possible to perform an axial deformation of the rim of said tube, achieving the flaring of the last coil and thereby the frontal seal of the fitting.

In a preferred embodiment, between the end facing the collet and the annular abutment shoulder, the threaded nipple has at least one curved surface with concavity facing the inside of the nipple, suitable for deforming the end portion of the tightening collet in such a way that said deformed end portion of the tightening collet is inserted in the valley between the first coil and the second coil of the corrugated tube for a subsequent flattening of said first coil in a mainly axial direction..

In a preferred embodiment, said curved surface connects to the annular abutment shoulder by means of a conical surface, preferably but not necessarily, consecutive to said curved surface.

The fitting described above does not need a gasket, unlike other existing solutions, ensuring the seal over time: in fact, in the known solutions with gasket the latter needs to be periodically replaced on account of the deterioration of the material caused by corrosion and/or ageing.

The fitting according to the invention can be used various times; the only part which needs to be replaced is the collet.

The need to flare, that is to compress the first coil of the corrugated metal tubes with a special equipment or tool is also eliminated, with a consequent saving of means and materials.

Advantageously, the proposed fitting contemporarily forms several sealing areas: frontally, between the metal tube and the annular shoulder of the nipple, radially between the outer surface of the collet and the inner surface of the nipple, and in addition between the surface of the annular projection of the collet towards the nipple and the outer end of said nipple, and between the surface of the annular projection of the collet facing outwards and the step or chamfer of the threaded nut.

The annular projection of the collet may be made with different cross-sections, such as rectangular, trapezoidal, hemispherical etc.

Said annular projection is sized so as to act, on the side facing the nipple, as an abutment stop on the end of the nipple, and on the opposite side, as a support for the inner chamfer or step of the nut, for the advancement of the collet, also realising a further seal.

Advantageously, the collet is configured symmetrically in relation to a transversal median axis, so as to permit its insertion in the nipple on both sides, preventing defects and drawbacks caused by distraction during its assembly.

The inner diameter of the collet is designed to house most of the existing corrugated metal tubes made by various manufacturers, tolerating a wide range of different outer diameters.

The length of the collet is designed so as to make the end of the nipple-nut assembly facing outwards project from the assembly so as to ensure the axiality of the corrugated pipe in the fitting itself; this also protects the corrugated tube to a certain extent against damage caused by flexion during assembly. This way the risk of injury from the sharp edges of the end of the corrugated tube is also considerably reduced.

In one embodiment, the nipple has a portion on its outer surface with a male thread compatible with a female thread made in the nut.

The nut has an inner diameter substantially equal or slightly greater than the outer diameter of the outer surface of the collet and less than the outer diameter of the radial projection. Advantageously, the inner diameter of the nut does not depend on the outer diameter of the corrugated tube.

Internally the nut has a female threading compatible with the male threading of the nipple.

Further characteristics and advantages of the fitting according to the invention will be more clearly comprehensible from the description given below of its preferred and non-limiting embodiments, with reference to the appended drawings, wherein:

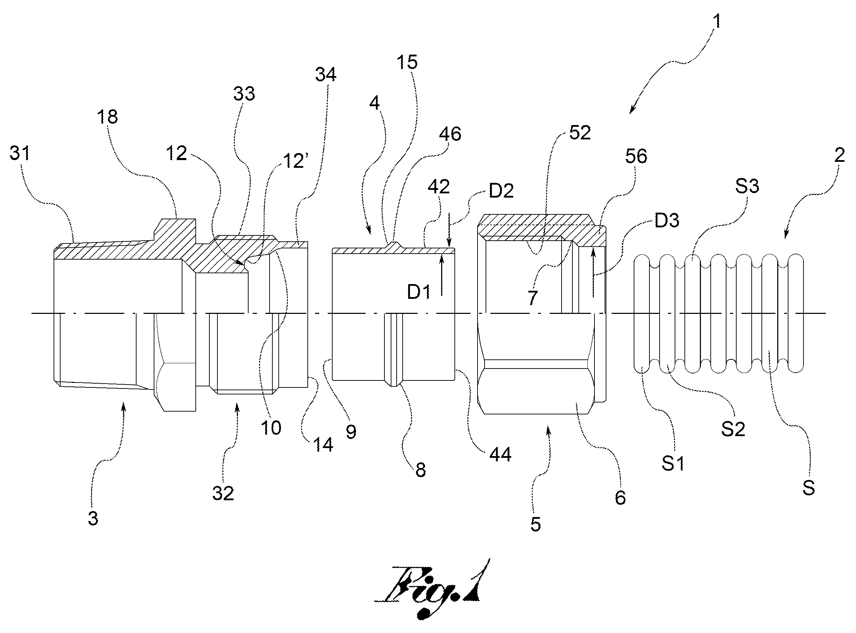

figure 1 is an exploded view of the elements composing the fitting according to the invention;
figure 2 shows, in partial cross-section, the assembled fitting connected to a metal corrugated tube with parallel coils, during the step of screwing the threaded nut to the nipple; and
figure 3 shows, in partial cross-section, the assembled fitting with the nut completely screwed to the nipple.

In said drawings, reference numeral 1 globally denotes a fitting according to the invention for the connection of a corrugated metal tube 2, for example with parallel coils S, to another component of a pipe network or system.

The fitting 1 comprises a threaded nipple 3, a tightening collet 4 suitable for being plastically radially deformed to block in an airtight manner the end of said corrugated tube to the nipple 3, and a threaded nut 5 suitable for being screwed to the nipple so as to cause the radial deformation of the collet.

The threaded nipple 3 has a rear portion 31 for connection to the component of the pipe network or system, for example by screwing, an intermediate gripping portion 18, for example of a hexagonal shape so as to be engaged by a tool, and a front portion 32 coupling to the threaded nut 5. Said front portion 32 has a threading 33 on its outer surface. In one embodiment, said threading 33 ends before an end portion 34 which delimits the intake of the nipple 3, preferably of a cylindrical shape internally as well, and which ends with a front rim 14.

The threaded nipple 3 has, internally, an annular abutment shoulder 12 for the end of the corrugated tube 2. Advantageously, said annular abutment shoulder 12 has a substantially concave semi-circular abutment end 12', that is of a shape substantially complementary to the coils S of the corrugated tube 2. Said annular shoulder 12 with concave end 12' is therefore internally delimited by an annular rim 13.

In a preferred embodiment, between the end portion 34 of the nipple 3 facing the collet and the annular abutment shoulder 12, the threaded nipple has at least one curved surface 10 with concavity facing the inside of the nipple, and a conical surface 11, preferably but not necessarily, consecutive to each other, suitable for causing a gradual deformation of the collet 4.

The tightening collet 4 is made in a material suitable for being plastically deformed when the collet is pressed axially against the nipple 3.

Plastic deformation is taken to mean that the tightening collet undergoes a permanent, or substantially permanent, deformation. In other words, the tightening collet 4 remains deformed even when the compression exerted on said collet by the threaded nut 5 ceases, for example when the nut is unscrewed from the threaded nipple 3. To achieve such result, the collet is made from metal, such as brass.

The tightening collet 4 extends from a tightening end portion 41, suitable for undergoing radial deformation, and a guide end portion 42, axially opposite the tightening end portion 41.

In a preferred embodiment, the tightening collet 4 is a substantially cylindrical shape, defined by a side wall 42 which extends from a first end 9, facing the nipple, and a second end 44, facing outwards.

Following the radial plastic deformation, said tightening end portion 41 tapers towards the first end 9, that is to say assumes a substantially conical shape.

In a preferred embodiment, said side wall 42 is continuous all along its axial extension. In particular the first end 9 of the tightening collet 4, suitable for flattening the corrugated tube, is continuous along its entire circumference.

The collet 4 has an inner diameter D1 and an outer diameter D2.

An annular prominence 46 extends radially from the outer surface of the side wall 42. The annular prominence is positioned between and remotely from opposite ends of the tightening collet. Preferably, said annular prominence 46 is substantially localised in an intermediate position between the two opposite ends of the collet and may have a rectangular, semi-circular, trapezoidal etc cross-section. Said annular prominence 46 has a first (inner) surface 15, facing the nipple 3, and a second (outer) surface 8, facing outwards.

When said annular prominence 46 is localised exactly in an intermediate position between the two opposite ends of the collet, the collet has a symmetrical shape in relation to an axis of symmetry passing through said annular prominence 46.

The threaded nut 5 has an inner threaded surface 52, with a (female) threading compatible with the (male) threading of the nipple, which from the rear end facing the nipple 3 extends as far as a step or chamfer 7 which determines a narrowing of the inner wall of the nut. The inner wall of the nut ends therefore with a cylindrical front portion 56, having an inner diameter D3 less than that of the threaded surface.

The components of the fitting 1 are supplied preassembled, that is the collet 4 is retained in the nipple 3 by the nut 5, the latter having been previously screwed to the thread of the nipple 3.

The corrugated metal tube 2 is inserted in the pre-assembled fitting 1 passing through the inside of the collet 4 until it reaches the concave end 12' of the annular abutment shoulder 12 of the threaded nipple 3.

At this point the screwing of the nut 5 to the nipple 3 is completed, acting on the hexagonal surface 6 of the nut 5, and taking care to contemporarily block the nipple 3 acting on the respective outer hexagonal surface 18.

Following the advancement of the nut 5, the step or chamfer 7 of the nut 5 engages the outer surface 8 of the annular projection 44 of the collet 4 thereby pushing the latter and making it advance towards the annular shoulder 12 of the nipple 3.

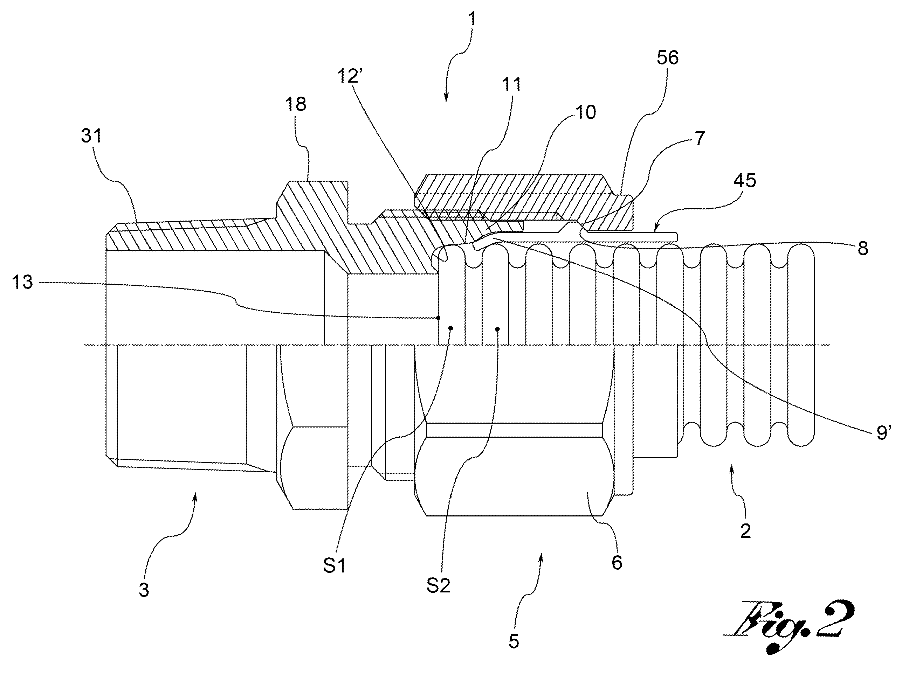

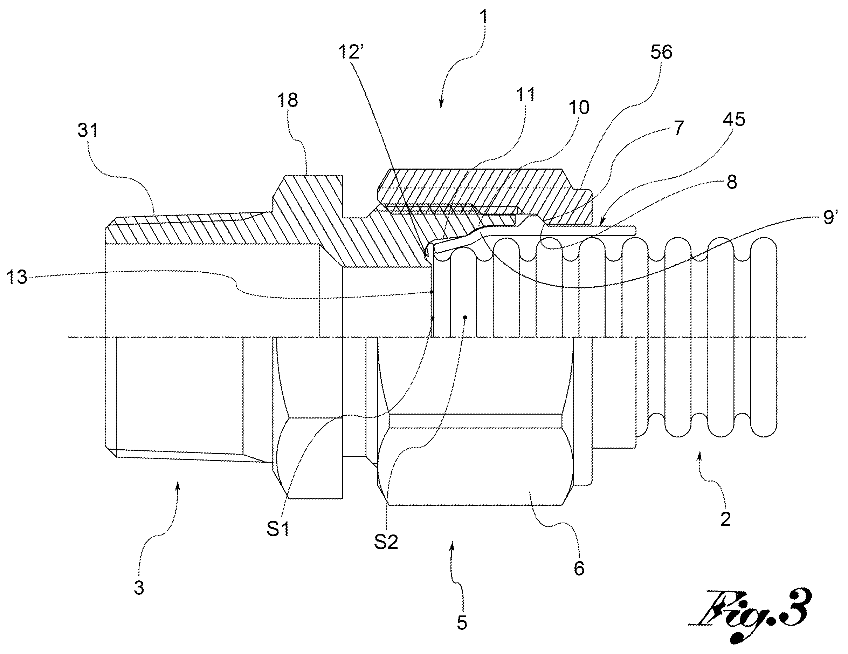

When the first end 9 of the collet 4 encounters the curved surface 10 of the nipple 3, an end portion of the collet facing towards the inside of the nipple 3 undergoes a first radial deformation (figure 2); subsequently, following the further axial advancement of the collet 4, the conical surface 11 of the nipple completes the radial deformation of the collet 4 (figure 3).

The aforementioned operation reduces the internal diameter D1 of the end portion of the collet facing towards the nipple making said end portion a substantially conical shape.

As may be seen from figure 3, said conically shaped end portion of collet connects to the cylindrical collet portion by means of an intermediate curved portion 9', the curvature of which is determined by the curved surface 10 of the nipple 3.

Such radial deformation of the collet 4 radially compresses the second coil S2 of the corrugated metal tube 2. In addition, the first end 9 of the collet comes to find itself behind the first coil S1, so as to compress said coil mainly in an axial direction against the concave end 12' of the annular abutment shoulder 12. Consequently, said concave end 12' deforms the end of the corrugated metal tube 2 in such a way as to compress the first coil S1 of the corrugated metal tube 2 between the inner rim 13 of the annular shoulder 12 and the end 9 of the collet 4.

At this point, the end 14 of the nipple 3 facing the nut 5 interferes with the inner surface 15 of the annular prominence 46 of the collet 4, preventing further screwing of the nut 5.

It should be noted that, thanks to the curved surface 10 of the nipple 3, the first end 9 of the tightening collet 4 is deformed in such a way as to insert itself in the valley between the first coil S1 and the second coil S2. This enables said first end 9 to flatten the first coil S1 against the concave end 12' of the annular abutment shoulder 12, mainly in an axial direction, so as to ensure an optimal seal between the corrugated tube 2 and the threaded nipple 3.

It should be emphasised that a first and main frontal seal to the transit of liquids and gases is achieved thanks to the compression of the first coil S1 of the metal tube 2 onto the annular abutment shoulder 12 of the threaded nipple 3; In addition, a radial seal is achieved by means of the contact between the outer surface of the radially deformed collet and the conical surface 11 of the nipple 3. Lastly, two further seals are achieved by means of the contact between the inner surface 15 of the annular prominence of the collet 4 and the end 14 of the nipple 3, and between the outer surface 8 of said annular prominence and the step or chamfer 7 of the nut 5, further guarantee of a complete and safe seal of the fitting 1.

It should be noted that, such sealing effects between the corrugated tube and the collet and between the collet and the nipple are ensured by the fact that the collet has a continuous lateral surface, in particular starting from its first end 9, that is, free of notches, chinks or holes.

In addition, such continuous structure of the collet wall makes it possible to confer a high degree of mechanical stability to the same, which is thus able to resist the application of elevated axial and radial forces.

It should also be noted that, when the nut is fully screwed to the nipple, the tightening collet 4 has a guide end portion 45 facing outwards which projects axially from the nipple-nut assembly so as to surround at least one coil S of the corrugated tube 2 outside the fitting. Said guide end portion 45 of the collet 4 acts as an axial guide for the corrugated tube in its end portion engaging with the fitting, contributing to the efficacy of the seal of the fitting and protecting the tube against damage caused by flexion during assembly.

## Claims

1. Fitting for corrugated metal tubes, comprising a threaded nipple (3) for connecting a corrugated tube (2) to another corrugated tube or component of a piping network or system, a tightening collet (4) suitable for being radially plastically deformed to block in an airtight manner the end of said corrugated tube to the nipple, the tightening collet (4) extending from a tightening end portion (41), suitable for undergoing radial deformation, and a guide end portion (42), axially opposite the tightening end portion (41), and a threaded nut (5) suitable for being screwed to the nipple so as to cause the radial deformation of the collet, **characterised in that** the tightening collet (4) has:
- an annular projection (46) on its outer surface suitable for being axially engaged by the threaded nut (5) so that the collet is made to advance towards the threaded nipple (3) during the screwing of the nut to the nipple, said annular projection (46) being positioned between and remotely from said tightening end portion (41) and from said guide end portion (42), said annular projection (46) having an inner surface (15) facing the nipple (3) and suitable for acting as an abutment stop on the end (14) of the nipple; and
- the guide end portion (45) protruding axially from the nipple-nut assembly so as to act as a guide and protection for the corrugated tube (2), when the threaded nut (5) is completely screwed to the nipple (3).

2. Fitting according to claim 1, wherein said guide end portion (45) extends outside the nipple-nut assembly so as to cover at least one coil of the corrugated tube.

3. Fitting according to claim 1 or 2, wherein the threaded nut (5) has internally a step or chamfer (7) suitable to axially engage said annular projection (46) of the collet so as to drag the collet towards the nipple and form a sealing zone between said step or chamfer and the surface of said annular projection facing axially outwardly.

4. Fitting according to any of the previous claims, wherein the outer diameter (D2) of the outer surface of the collet is substantially equal to the minimum inner diameter (D3) of the threaded nut.

5. Fitting according to any of the previous claims, wherein the threaded nipple has, internally, an annular abutment shoulder (12) for the end of the corrugated tube.

6. Fitting according to claim 5, wherein said annular abutment shoulder (12) has a concave abutment end (12').

7. Fitting according to any of the claims 5 or 6, wherein, between the end facing the tightening collet and the annular abutment shoulder, the threaded nipple has at least one curved surface (10) with concavity facing the inside of the nipple and suitable for deforming the end portion of the tightening collet in such a way that said deformed end portion of the tightening collet inserts itself in the valley between the first coil and the second coil of the corrugated tube for the subsequent flattening of said first coil mainly in an axial direction.

8. Fitting according to claim 7, wherein said curved surface (10) connects to the annular abutment shoulder (12) by means of a conical surface (11).

9. Fitting according to any of the previous claims, wherein the tightening collet (4) is a symmetrical shape in relation to a transversal median axis.

10. Fitting according to any of the previous claims, wherein said tightening collet (4) is a cylindrical shape.

11. Fitting according to any of the previous claims, wherein the tightening collet (4) has a continuous side wall.

12. Fitting according to any of the previous claims, wherein the tightening end portion (41) of the tightening collet (4) is suitable for undergoing plastic deformation, and wherein said tightening end portion (41) has a flattening effect on the end of the corrugated tube and is continuous all along its circumference.

## Patentansprüche

1. Anschlussstück für gewellte Metallrohre, umfassend einen Gewindenippel (3) zum Verbinden eines gewellten Rohrs (2) mit einem anderen gewellten Rohr oder einer Komponente eines Rohrnetzes oder -systems, eine Dichtungshülse (4), welche dafür geeignet ist, in radialer Richtung plastisch verformt zu werden, um das Ende des gewellten Rohrs luftdicht an dem Nippel zu befestigen, wobei die Dichtungshülse (4) von einem Dichtungsendabschnitt (41), welcher dafür geeignet ist, eine Verformung in radialer Richtung zu erfahren, zu einem Führungsendabschnitt (42) verläuft, welcher dem Dichtungsendabschnitt (41) in axialer Richtung abgewandt ist, und eine Gewindemutter (5), welche dafür geeignet ist, so auf den Nippel geschraubt zu werden, dass sie die Verformung der Hülse in radialer Richtung verursacht, **dadurch gekennzeichnet, dass** die Dichtungshülse (4) aufweist:
- einen ringförmigen Vorsprung (46) auf ihrer Außenfläche, welcher dafür geeignet ist, von der Gewindemutter (5) in axialer Richtung so berührt zu werden, dass die Hülse veranlasst wird, während des Schraubens der Mutter auf den Nippel zu dem Gewindenippel (3) hin bewegt zu werden, wobei der ringförmige Vorsprung (46) zwischen dem Dichtungsendabschnitt (41) und dem Führungsendabschnitt (42) und entfernt von diesen positioniert ist, wobei der ringförmige Vorsprung (46) eine innere Fläche (15) hat, welche dem Nippel (3) zugewandt ist und dafür geeignet ist, als ein Anschlag an dem Ende (14) des Nippels zu fungieren; und
- den Führungsendabschnitt (45), welcher von der Nippel-Mutter-Baugruppe derart vorsteht, dass er als eine Führung und ein Schutz für das gewellte Rohr (2) fungiert, wenn die Gewindemutter (5) vollständig auf den Nippel (3) geschraubt ist.

2. Anschlussstück nach Anspruch 1, wobei sich der Führungsendabschnitt (45) derart außerhalb der Nippel-Mutter-Baugruppe erstreckt, dass er mindestens einen Ring des gewellten Rohrs bedeckt.

3. Anschlussstück nach Anspruch 1 oder 2, wobei die Gewindemutter (5) innen eine Stufe oder Kante (7) hat, die dafür geeignet ist, den ringförmigen Vorsprung (46) der Hülse so zu berühren, dass sie die Hülse zu dem Nippel hin zieht und eine Dichtungszone zwischen der Stufe oder Kante und der in axialer Richtung nach außen zeigenden Oberfläche des ringförmigen Vorsprung bildet.

4. Anschlussstück nach einem der vorhergehenden Ansprüche, wobei der Außendurchmesser (D2) der Außenfläche der Hülse im Wesentlichen gleich dem minimalen Innendurchmesser (D3) der Gewindemutter ist.

5. Anschlussstück nach einem der vorhergehenden Ansprüche, wobei der Gewindenippel innen eine ringförmige Anschlagschulter (12) für das Ende des gewellten Rohrs hat.

6. Anschlussstück nach Anspruch 5, wobei die ringförmige Anschlagschulter (12) ein konkaves Anschlagende (12') hat.

7. Anschlussstück nach einem der Ansprüche 5 oder 6, wobei der Gewindenippel zwischen dem der Dichtungshülse zugewandten Ende und der ringförmigen Anschlagschulter mindestens eine gewölbte Fläche (10) hat, wobei die Wölbung der Innenseite des Nippels zugewandt ist und dafür geeignet ist, den Endabschnitt der Dichtungshülse derart zu verformen, dass der verformte Endabschnitt der Dichtungshülse sich in die Kehle zwischen dem ersten Ring und dem zweiten Ring des gewellten Rohrs einführt, zwecks nachfolgender Ebnung der ersten Windung hauptsächlich in axialer Richtung.

8. Anschlussstück nach Anspruch 7, wobei die gewölbte Fläche (10) die ringförmige Anschlagschulter (12) mittels einer abgeschrägten Fläche (11) ankoppelt.

9. Anschlussstück nach einem der vorhergehenden Ansprüche, wobei die Dichtungshülse (4) in Bezug auf eine transversale Mittelachse eine symmetrische Form ist.

10. Anschlussstück nach einem der vorhergehenden Ansprüche, wobei die Dichtungshülse (4) eine zylindrische Form ist.

11. Anschlussstück nach einem der vorhergehenden Ansprüche, wobei die Dichtungshülse (4) eine durchgehende Seitenwand hat.

12. Anschlussstück nach einem der vorhergehenden Ansprüche, wobei der Dichtungsendabschnitt (41) der Dichtungshülse (4) dafür geeignet ist, eine plastische Verformung zu erfahren, und wobei der Dichtungsendabschnitt (41) auf das Ende des gewellten Rohrs eine ebnende Wirkung hat und entlang seinem gesamten Umfang durchgehend ist.

## Revendications

1. Raccord pour des tubes métalliques ondulés, comprenant un nipple fileté (3) pour la liaison d'un tube ondulé (2) à un autre tube ou composant ondulé d'un réseau ou système de tuyauterie, un collet de serrage (4) adapté pour être déformé radialement plastiquement pour bloquer de manière étanche à l'air l'extrémité dudit tube ondulé sur le nipple, le collet de serrage (4) s'étendant depuis une partie d'extrémité de serrage (41) adaptée pour subir une déformation radiale et une partie d'extrémité de guidage (42) opposée axialement à la partie d'extrémité de serrage (41), et un écrou fileté (5) adapté pour être vissé au nipple de sorte à entraîner la déformation radiale du collet, **caractérisé en ce que** le collet de serrage (4) possède :
- une saillie annulaire (46) sur sa surface extérieure adaptée pour être engagée axialement par l'écrou fileté (5) de sorte que le collet soit amené à avancer vers le nipple fileté (3) pendant le vissage de l'écrou au nipple, ladite saillie annulaire (46) étant positionnée entre et à distance de ladite partie d'extrémité de serrage (41) et de ladite partie d'extrémité de guidage (42), ladite saillie annulaire (46) présentant une surface intérieure (15) faisant face au nipple (3) et adaptée pour agir comme un arrêt de butée sur l'extrémité (14) du nipple ; et
- la partie d'extrémité de guidage (45) faisant saillie axialement de l'ensemble d'écrou et de nipple de sorte à agir comme guidage et protection pour le tube ondulé (2) lorsque l'écrou fileté (5) est complètement vissée au nipple (3).

2. Raccord selon la revendication 1, dans lequel ladite partie d'extrémité de guidage (45) s'étend en dehors de l'ensemble d'écrou et de nipple de sorte à couvrir au moins une spirale du tube ondulé.

3. Raccord selon la revendication 1 ou 2, dans lequel l'écrou fileté (5) a en interne un étage ou chanfrein (7) adapté pour engager axialement ladite saillie annulaire (46) du collet de sorte à traîner le collet vers le nipple et former une zone étanche entre ledit étage ou ledit chanfrein et la surface de ladite saillie annulaire faisant face axialement vers l'extérieur.

4. Raccord selon l'une quelconque des revendications précédentes, dans lequel le diamètre extérieur (D2) de la surface extérieure du collet est sensiblement égal au diamètre intérieur minimum (D3) de l'écrou fileté.

5. Raccord selon l'une quelconque des revendications précédentes, dans lequel le nipple fileté a en interne un épaulement de butée annulaire (12) pour l'extrémité du tube ondulé.

6. Raccord selon la revendication 5, dans lequel ledit épaulement de butée annulaire (12) a une extrémité de butée concave (12').

7. Raccord selon l'une quelconque des revendications 5 ou 6, dans lequel entre l'extrémité faisant face au collet de serrage et l'épaulement de butée annulaire, le nipple fileté a au moins une surface courbée (10) avec la concavité faisant face à l'intérieur du nipple et adaptée pour déformer la partie d'extrémité du collet de serrage de telle manière que ladite partie d'extrémité déformée du collet de serrage s'insère elle-même dans le creux entre la première spirale et la seconde spirale du tube ondulé pour l'aplatissement ultérieur de ladite première spirale principalement dans une direction axiale.

8. Raccord selon la revendication 7, dans lequel ladite surface courbée (10) se relie à l'épaulement de butée annulaire (12) à l'aide d'une surface conique (11).

9. Raccord selon l'une quelconque des revendications précédentes, dans lequel le collet de serrage (4) est une forme symétrique par rapport à un axe médian transversal.

10. Raccord selon l'une quelconque des revendications précédentes, dans lequel ledit collet de serrage (4) est une forme cylindrique.

11. Raccord selon l'une quelconque des revendications précédentes, dans lequel le collet de serrage (4) a une paroi latérale continue.

12. Raccord selon l'une quelconque des revendications précédentes, dans lequel la partie d'extrémité de serrage (41) du collet de serrage (4) est adaptée pour subir une déformation plastique et dans lequel ladite partie d'extrémité de serrage (41) a un effet d'aplatissement sur l'extrémité du tube ondulé et est continue sur toute sa circonférence.
